# NOUVEAU FASCICULE DE BREVET EUROPEEN

(11) **EP 2 392 442 B2**
(45) Date de publication et mention de la décision concernant l'opposition: **07.11.2018**
(45) Mention de la délivrance du brevet: 24.04.2013
(21) Numéro de dépôt: 11166723.4
(22) Date de dépôt: 19.05.2011
(51) Int. Cl.: B29B 13/02, B29C 49/68

(54) **Four pour le conditionnement thermique de préformes et procédé de commande d'un dispositif de refroidissement par air équipant un tel four**
Ofen für die Wärmebehandlung von Vorformligen und Steuerungsverfahren einer Abkühlvorrichtung mit Hilfe von Luft, die in einem solchen Ofen eingebaut ist
Oven for the thermal conditioning of preforms and control method of an air cooling device fitted to such an oven

(30) Priorité: 02.06.2010 FR 1054309
(43) Date de publication de la demande: 07.12.2011
(73) Titulaire: SIDEL PARTICIPATIONS, 76930 Octeville-sur-Mer (FR)
(72) Inventeur: Derrien, Mikael, 76930, Octeville sur Mer (FR)
(74) Mandataire: Gevers & Orès

(56) Documents cités:
- EP-A1- 1 383 636
- FR-A1- 2 934 196
- US-A1- 2007 148 272
- US-B1- 6 632 087
- US-B2- 6 839 652

## Description

La présente invention concerne un procédé de commande d'un dispositif de refroidissement par air équipant un tel four selon la revendication 1.

La présente divulgation concerne plus particulièrement un four pour le conditionnement thermique de préformes en matière thermoplastique comportant chacune respectivement une première partie à sa forme définitive et une deuxième partie destinée à être chauffée par des moyens de chauffage disposés le long d'au moins une partie d'un parcours de chauffe déterminé suivi par les préformes circulant dans le four, ledit four comportant un système de refroidissement apte à refroidir les premières et les deuxièmes parties des préformes, ledit système de refroidissement comportant au moins un dispositif de refroidissement qui est apte à refroidir par air au moins la deuxième partie des préformes et qui comporte au moins des moyens de ventilation aptes à délivrer un débit donné d'air de refroidissement.

D'une manière générale, l'invention concerne le domaine de la fabrication de récipients obtenus par transformation de préformes, en particulier par soufflage ou par étirage-soufflage, les préformes étant notamment obtenues par injection de matière thermoplastique, par exemple de polyéthylène téréphtalate (PET).

Pour ce faire, les préformes subissent préalablement un conditionnement thermique dans un four afin d'être portées à une température supérieure à la température de transition vitreuse du matériau constitutif.

La fabrication de récipients tels que des bouteilles, des flacons ou tout autre type de corps creux, est généralement réalisée dans des installations comportant un tel four de conditionnement thermique de préformes associé à au moins une machine de transformation des préformes en récipients disposée en aval, comme une "souffleuse" par exemple.

On connaît de l'état de la technique de nombreux fours de conditionnement thermique de préformes, notamment intégrés à des installations pour la fabrication de récipients.

Le document WO-A-2004/062885, auquel on se reportera pour de plus amples détails, illustre de manière non limitative un exemple de four de conditionnement thermique, plus particulièrement un four de type linéaire (par opposition notamment au four de type circulaire).

On rappellera qu'une préforme ou ébauche en matière thermoplastique comporte respectivement une première partie à sa forme définitive qui est constituée par le col et la collerette, et une deuxième partie seule destinée à être conditionnée thermiquement dans le four qui est constituée par le corps et le fond.

Le conditionnement thermique des deuxièmes parties formées du corps et du fond des préformes est une opération particulièrement délicate en raison de l'importance que revêt la température du matériau pour les opérations subséquentes de transformation, par exemple par soufflage d'un gaz sous pression (air) ou par étirage-soufflage ou encore au moins en partie transformée par remplissage au moyen d'un liquide sous pression.

D'une part, la température moyenne de la deuxième partie des préformes doit être supérieure à la température de transition vitreuse du matériau (environ 80°C pour le PET) afin de permettre une bi-orientation de la matière lors de la transformation, tout en étant inférieure à une température de cristallisation (environ 140°C pour le PET) au-delà de laquelle le matériau présente des risques de cristallisation qui rendrait la préforme impropre à toute transformation.

Ainsi, une température trop basse de la préforme peut induire sur le récipient final l'apparition d'une perlescence (aspect perlé) blanchâtre conséquence d'un surétirage de la préforme provoquant au niveau moléculaire une rupture des longues chaînes polymérisées.

A contrario, une température trop élevée de la préforme peut provoquer une cristallisation sphérolitique du matériau constitutif rendant alors la préforme impropre à toute opération de transformation notamment par soufflage et/ou remplissage.

D'autre part, la distribution de température au sein de la préforme elle-même a une incidence sur la qualité du récipient final, et en particulier sur sa transparence et sur la répartition de la matière dans le corps et le fond du récipient.

La distribution de la température dans le corps et le fond de la préforme revêt plusieurs aspects, à savoir la distribution sur la circonférence de la préforme (c'est-à-dire angulairement autour de l'axe principal de la préforme), axialement ensuite (c'est-à-dire parallèlement audit axe) et enfin dans l'épaisseur de la paroi du corps et du fond de la préforme.

Ainsi, pour assurer une distribution de la température sur toute la circonférence de la préforme, les préformes sont généralement mises en rotation sur elle-même, autour de leur axe principal, simultanément à leur déplacement devant les moyens de chauffage disposés sur tout ou partie du parcours de chauffe.

La mise en rotation des préformes en vue d'obtenir une distribution circonférentielle uniforme est cependant fonction des applications, dès lors que pour certaines applications une répartition circonférentielle non uniforme est également parfois recherchée, en particulier pour des récipients de forme complexe.

Pour de plus amples détails, on se reportera par exemple au document WO-A-94/23932 concernant le conditionnement thermique d'une préforme en vue d'obtenir un récipient final à corps de forme complexe.

La mise en rotation des préformes est réalisée grâce à des moyens de préhension maintenant les préformes en position, col en haut ou col en bas, tout au long du parcours de chauffe, les moyens de préhension étant liés en déplacement au dispositif de transport effectuant en boucle ledit parcours de chauffe.

Le document WO-A-00/48819, auquel on se reportera pour de plus amples détails, illustre un exemple d'un dispositif de transport et de moyens de préhension perfectionnés.

Il est également possible de contrôler la distribution axiale de la température, soit le profil de chauffe parallèlement à l'axe de la préforme, et ceci en contrôlant par exemple la puissance rayonnée des lampes (à rayonnements infrarouges) ou des diodes utilisées comme moyens de chauffage dans de tel four, en usant de moyens focalisateurs (FR-A-2.732.924) ou encore en réglant sélectivement la position de chaque lampe pour faire varier la distance entre chacune des lampes et la portion correspondante de la deuxième partie des préformes (FR-A-2.872.734).

La distribution de la température dans l'épaisseur de la paroi du corps et du fond de la préforme est, en revanche, bien plus difficile à maîtriser alors même que cette distribution est capitale pour la maîtrise de l'opération ultérieure de transformation de la préforme en récipient.

A l'issue du conditionnement thermique de la préforme, on recherche idéalement à obtenir un gradient de température dans la paroi qui soit tel que la température de la surface interne de la paroi soit supérieure, à défaut au moins égale, à la température de la surface externe de la paroi.

En effet, on a constaté qu'un faible gradient entre la température de la surface externe de la paroi et la température de la surface interne de la paroi, comparativement supérieure à celle de la surface externe, permet d'obtenir un récipient final présentant de bonnes qualités visuelles et structurelles, notamment une bonne transparence et d'une épaisseur relativement homogène.

La raison en est notamment que, lors de la transformation de la préforme en récipient, le développé radial du diamètre intérieur de la préforme est alors supérieur au développé radial du diamètre extérieur et il est par conséquent préférable que la paroi présente un tel gradient de température favorable à la surface de la paroi effectuant le plus grand développé radial.

De surcroît, on comprendra que l'obtention d'un tel gradient est en pratique d'autant plus important que la paroi présente une forte épaisseur ou que le récipient est obtenu après un fort développement radial de la préforme.

Dans un four de conditionnement thermique, il est connu d'utiliser un système de refroidissement par air pour assurer une double fonction de refroidissement.

Le système de refroidissement assure, d'une part, le refroidissement des deuxièmes parties des préformes et, d'autre part, le refroidissement des premières parties des préformes et des organes mécaniques constitutifs du four pour éviter leur détérioration.

Un tel système de refroidissement par air des préformes participe, en combinaison avec les paramètres de chauffage, à l'obtention du gradient recherché dans la paroi de la préforme en favorisant la transmission de la chaleur par convection dans l'épaisseur de la matière du corps et du fond et en limitant le chauffage superficiel induit par l'absorption du rayonnement émis.

En effet, la demanderesse a pu établir que la maîtrise de la distribution de la température dans le corps et le fond et l'obtention d'un gradient du type précité dans la paroi de cette deuxième partie de la préforme résulte tout particulièrement du réglage des divers paramètres suivants :
- le temps d'exposition aux rayonnements ;
- la vitesse de rotation des préformes sur elle-même;
- le temps de stabilisation thermique des préformes ;
- le refroidissement par ventilation du corps et du fond.

Ces réglages sont généralement effectués sur la base de mesures de température effectuées sur les préformes à la sortie du four de conditionnement thermique.

Ainsi, l'optimisation du procédé de conditionnement thermique pour obtenir la distribution de température voulue dans les deuxièmes parties des préformes dans le four découle tout particulièrement du réglage de ces paramètres.

Pour optimiser le conditionnement thermique des préformes, des perfectionnements ont été apportés aux fours mais ils sont essentiellement focalisés sur les moyens de chauffage disposés le long d'au moins une partie du parcours de chauffe afin de former un tunnel de chauffage.

Pour le système de refroidissement en revanche, les perfectionnements apportés concernent principalement la qualité de l'air utilisé dans le four aux fins de refroidissement, sa propreté (poussières, bactéries, etc.), sa température ou son degré d'humidité.

Pour le système de refroidissement, on règle alors la consigne des moyens de ventilation du système de refroidissement pour obtenir un débit d'air de refroidissement propre à éviter toute cristallisation et à préserver également les organes mécaniques du four.

Ainsi et en raison de sa double fonction, la ventilation n'est pas un paramètre considéré par l'homme du métier lors de la détermination des réglages du four de conditionnement thermique des préformes.

En effet, la puissance des moyens de ventilation du système de refroidissement est réglée initialement pour délivrer un débit donné d'air de refroidissement propre à éviter la cristallisation de la préforme et à préserver les organes mécaniques du four.

Par conséquent, le débit d'air de refroidissement est toujours constant tout au long du parcours de chauffe suivi par les préformes.

Le document FR-A-2.934.196 décrit par exemple un four de conditionnement thermique de préformes en matière thermoplastique comportant un tel système de refroidissement.

L'air de refroidissement est donc délivré aux deuxièmes parties des préformes avec toujours le même débit et ceci quelle que soit la position de la préforme sur l'ensemble du parcours de chauffe, depuis l'entrée jusqu'à la sortie du four, les préformes reçoivent une quantité identique d'air de refroidissement au cours du parcours de chauffe.

Le but de la présente invention est notamment d'améliorer le procédé de conditionnement thermique des préformes dans un four en optimisant le refroidissement afin d'améliorer la qualité de fabrication des récipients.

L'invention propose donc de faire varier le débit de l'air de refroidissement au cours du parcours de chauffe, de préférence exclusivement l'air de refroidissement des deuxièmes parties des préformes, le débit d'air étant déterminé en fonction de la position occupée par la préforme le long dudit parcours.

Avantageusement, l'air de refroidissement est délivré à la deuxième partie d'une préforme parcourant un tronçon donné du parcours de chauffe avec un débit d'air donné qui est au moins différent du débit avec lequel l'air de refroidissement est délivré à ladite deuxième partie de cette même préforme parcourant un autre tronçon dudit parcours.

Le principe de l'invention consistant à faire varier au moins le débit de l'air de refroidissement délivré aux deuxièmes parties des préformes à conditionner thermiquement va à l'encontre des préjugés de l'homme du métier.

Tout d'abord en raison du fait que le système de refroidissement par ventilation d'air a également pour fonction la préservation des organes mécaniques et non pas uniquement celle de prévenir la cristallisation.

En effet, dans les fours de conditionnement de l'état de la technique, le système de refroidissement assure la double fonction en refroidissant d'une part le corps (et le fond) et, d'autre part, le col et les organes mécaniques comme les moyens de préhension.

Ainsi, jusqu'alors l'ensemble des moyens de ventilation du système de refroidissement était réglé initialement avec une consigne de puissance déterminée de manière à délivrer un débit d'air de refroidissement des préformes constant sur l'ensemble du parcours de chauffe.

Dans l'état de la technique, les moyens de ventilation délivrent un débit d'air de refroidissement aux préformes qui est identique en tout point du parcours de chauffe de sorte que chaque deuxième partie d'une préforme reçoit de l'air de refroidissement de manière parfaitement uniforme tout au long du parcours de chauffe.

Selon l'invention, le débit d'air de refroidissement délivré aux deuxièmes parties des préformes varie avantageusement au cours du parcours de chauffe pour optimiser le conditionnement thermique et plus particulièrement pour obtenir un gradient dans la paroi tel que la température interne soit supérieure à la température externe, dans un temps de conditionnement thermique le plus court possible.

Grâce à l'invention, on améliore le rendement du four de conditionnement thermique, par exemple en ne refroidissant plus ou avec un faible débit d'air de refroidissement les préformes, généralement introduites froides, sur le premier tronçon du parcours de chauffe succédant directement à l'entrée du four.

En effet, le risque de cristallisation de la préforme est alors quasi-nul de sorte que l'air de refroidissement délivré jusqu'alors sur un tel premier tronçon ne contribue qu'à réduire l'efficacité des moyens de chauffage et à augmenter subséquemment la durée totale nécessaire à l'obtention du conditionnement thermique souhaité pour la préforme.

L'invention permet donc, outre l'augmentation du rendement des fours, de réduire également la consommation d'énergie des fours, tout particulièrement la consommation d'électricité utilisée par les moyens de chauffage.

En effet, le réglage d'un débit d'air de refroidissement faible ou nul sur le premier tronçon du parcours va incidemment permettre de diminuer le réglage de la puissance des moyens de chauffage de manière que la consommation d'électricité s'en trouve alors réduite et cela sans pour autant que ne soit affecté le début du chauffage des préformes.

Avantageusement, la consommation d'énergie des moyens de ventilation est également réduite dès lors que le débit d'air est optimisé pour chaque tronçon du parcours de chauffe, que les moyens de chauffage y soient actifs ou non comme par exemple dans les tronçons de stabilisation.

Avantageusement, le système de refroidissement comporte au moins un premier dispositif de refroidissement destiné à refroidir la première partie des préformes présentant leur forme définitive et un deuxième dispositif de refroidissement, indépendant du premier dispositif de refroidissement, destiné à refroidir par air la deuxième partie des préformes.

Grâce à un tel système de refroidissement, on dissocie totalement les fonctions de refroidissement par rapport aux solutions connues à l'état de la technique, en refroidissant les deuxièmes parties des préformes indépendamment des premières parties des préformes et des moyens de préhension liés au dispositif de transport.

Avantageusement, on optimise ainsi constamment tout au long du parcours de chauffe le débit de l'air de refroidissement nécessaire pour l'établissement du gradient souhaité, tout en évitant les risques de cristallisation des deuxièmes parties de préformes.

Selon d'autres caractéristiques de la divulgation:
- lesdits moyens pour faire varier sélectivement le débit d'air de refroidissement sur au moins la deuxième partie des préformes le long du parcours de chauffe sont constitués par au moins un variateur de vitesse associé à au moins un des moyens de ventilation dudit au moins un dispositif de refroidissement de sorte que la variation du débit d'air de refroidissement le long du parcours est obtenue en commandant sélectivement ledit variateur de vitesse associé audit moyen de ventilation, indépendamment des autres moyens de ventilation du dispositif de refroidissement ;
- le variateur de vitesse est commandé par l'intermédiaire d'au moins une unité de commande pour agir sur un moteur d'entraînement dudit moyen de ventilation associé de manière à faire varier sélectivement, au cours du parcours de chauffe, le débit d'air délivré pour le refroidissement d'au moins les deuxièmes parties de préformes ;
- les moyens pour faire varier sélectivement le débit d'air de refroidissement sur au moins la deuxième partie des préformes le long du parcours de chauffe sont au moins constitués par des moyens d'obturation de sorte que la variation du débit d'air de refroidissement le long du parcours est obtenue en commandant sélectivement chacun des moyens d'obturation indépendamment des autres moyens d'obturation du dispositif de refroidissement ;
- les moyens d'obturation sont aptes à être commandés sélectivement en position de manière à faire varier sélectivement, au cours du parcours de chauffe, le débit d'air délivré pour le refroidissement d'au moins les deuxièmes parties de préformes ;
   -- les moyens d'obturation, tels qu'au moins un volet pivotant, sont agencés dans au moins un conduit du dispositif de refroidissement destiné à acheminer l'air de refroidissement jusqu'aux deuxièmes parties des préformes ;
   -- les moyens d'obturation, tels qu'au moins un volet coulissant, sont agencés en amont des réflecteurs faisant face aux moyens de chauffage et sont montés mobiles en position pour ouvrir ou fermer sélectivement tout ou partie des ouvertures de passage de l'air de refroidissement qui sont ménagées au niveau des réflecteurs pour délivrer l'air de refroidissement aux deuxièmes parties des préformes ;
- le four comporte des moyens de mesure de température aptes à mesurer la température interne et/ou la température externe de la paroi de la deuxième partie des préformes en au moins une position déterminée le long du parcours de chauffe et à fournir au moins un signal représentatif de l'une desdites températures mesurées ou du gradient correspondant à la différence entre lesdites températures interne et externe de la paroi ;
- le système de refroidissement comporte au moins une unité de commande dudit au moins un dispositif de refroidissement qui est apte à piloter lesdits moyens destinés à faire varier sélectivement au cours du parcours de chauffe le débit d'air pour le refroidissement d'au moins les deuxièmes parties des préformes, de manière à réguler le conditionnement thermique des préformes le long du parcours de chauffe en pilotant en temps réel lesdits moyens du dispositif de refroidissement ;
- ladite unité de commande pilote lesdits moyens en fonction d'au moins une donnée telle que ledit au moins un signal représentatif de la température interne et/ou externe de la paroi ou du gradient correspondant à la différence entre lesdites températures interne et externe ;
- le four est de conception modulaire comportant au moins un nombre [n] de modules dans lesquels sont montés lesdits moyens de chauffage disposés le long de tout ou partie du parcours de chauffe et les moyens pour faire varier sélectivement le débit d'air pour le refroidissement d'au moins les deuxièmes parties des préformes sont mutualisés entre au moins deux modules agencés pour former un bloc en série et/ou en parallèle.

L'invention propose encore un procédé de commande d'un deuxième dispositif de refroidissement conformément à la revendication 1 qui, équipant un four de conditionnement thermique, est destiné à refroidir par air au moins les deuxièmes parties des préformes circulant dans le four suivant un parcours de chauffe, caractérisé en ce que le procédé de commande comporte au moins une étape consistant à commander des moyens pour faire varier sélectivement le débit de l'air de refroidissement délivré au moins auxdites deuxièmes parties des préformes le long du parcours de chauffe.

Avantageusement, le procédé comporte une étape consistant à mesurer la température interne et/ou externe de la paroi de la deuxième partie de la préforme de manière à produire au moins un signal représentatif de la température interne et/ou externe de la paroi ou du gradient correspondant à la différence entre lesdites températures interne et externe.

Avantageusement, le procédé comporte au moins une étape de régulation consistant à piloter en temps réel lesdits moyens pour réguler, en fonction d'au moins une donnée telle qu'au moins un signal représentatif de température, le débit d'air pour le refroidissement d'au moins les deuxièmes parties des préformes qui est délivré de manière variable le long du parcours de chauffe.

Grâce au procédé de commande du dispositif de refroidissement par air selon l'invention, on optimise le conditionnement thermique des préformes dans le four.

D'autres caractéristiques et avantages de l'invention apparaîtront à la lecture de la description détaillée qui suit pour la compréhension de laquelle on se reportera aux dessins annexés dans lesquels :

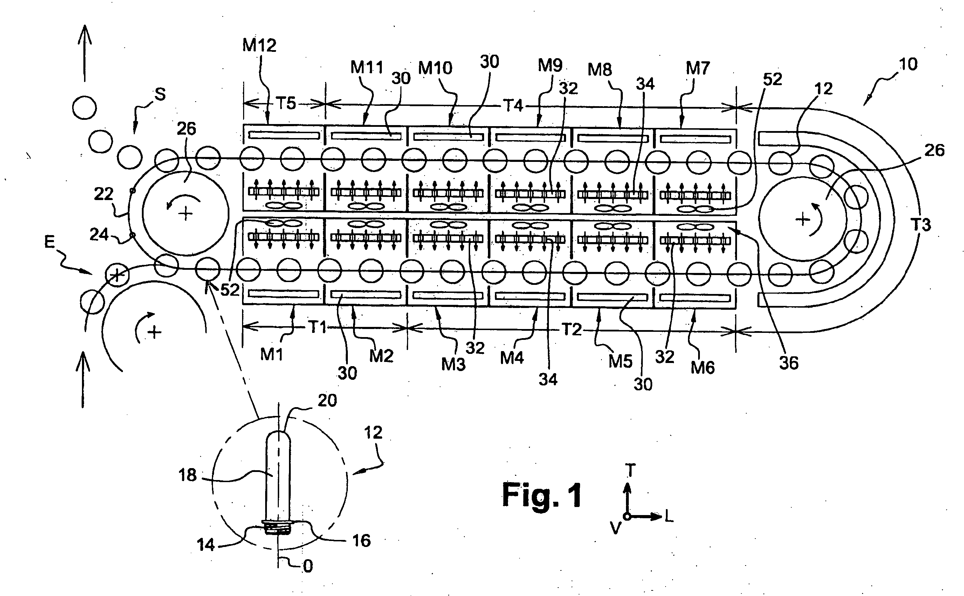

- la figure 1 est une vue de dessus qui représente schématiquement un exemple de réalisation d'un four pour le conditionnement thermique de préformes ;

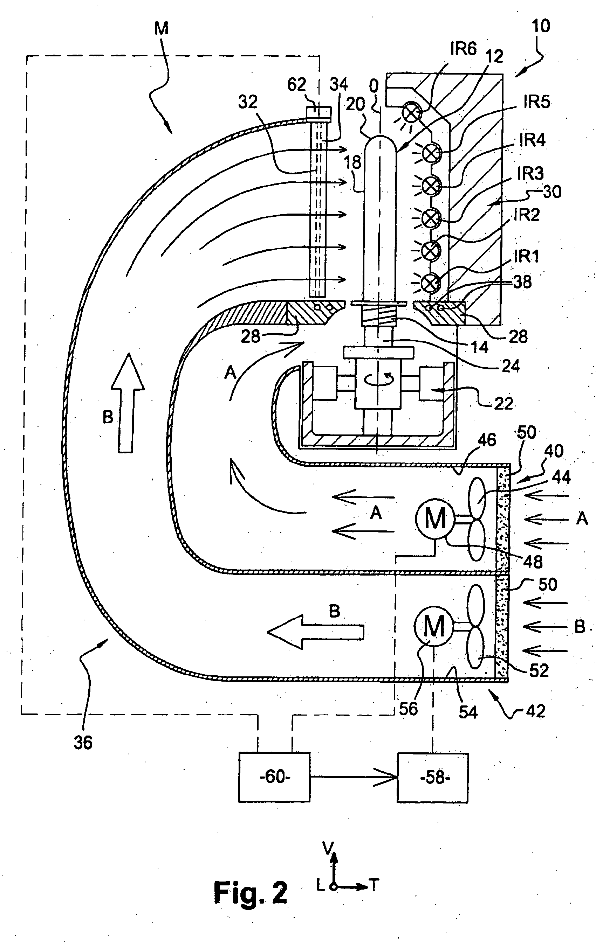

- la figure 2 est une vue en coupe transversale qui représente schématiquement un module du four selon la figure 1 et qui illustre un premier mode de réalisation des moyens aptes à faire varier sélectivement le long d'une partie du parcours de chauffe le débit de l'air de refroidissement qui est au moins délivré auxdites deuxièmes parties des préformes ;

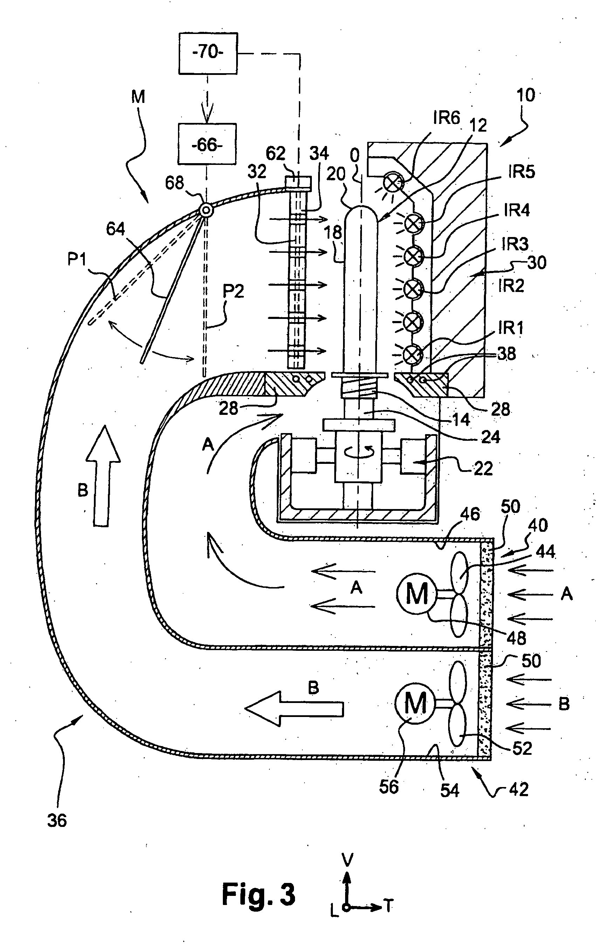

- la figure 3 qui illustre un deuxième mode de réalisation qui ne fait pas partie de l'invention est une vue en coupe transversale, analogue à la figure 2, qui représente schématiquement un module du four selon la figure 1 et qui illustre un deuxième mode de réalisation des moyens aptes à faire varier sélectivement le long d'une partie du parcours de chauffe le débit de l'air de refroidissement qui est au moins délivré auxdites deuxièmes parties des préformes.

Dans la description et les revendications, on utilisera à titre non limitatif, les orientations "longitudinale", "verticale" et "transversale" pour désigner respectivement des éléments selon les définitions données dans la description et par rapport au trièdre (L, V, T) représenté sur les figures.

Par convention, on utilisera les termes "supérieur" et "inférieur" pour qualifier les éléments par rapport à l'orientation verticale du trièdre (L, V, T) et cela sans référence aucune à la gravité terrestre.

De même, on utilisera les termes "amont" et "aval" en référence au sens de circulation des préformes suivant le parcours de chauffe ou encore en référence au sens de circulation de l'air de refroidissement dans le four.

Les éléments identiques, similaires ou analogues de l'invention seront désignés par les mêmes chiffres de référence.

On a représenté à la figure 1 un exemple de réalisation d'un four 10 de conditionnement thermique de préformes 12 en matière thermoplastique.

De manière non limitative, le four 10 est un four de type linéaire présentant un parcours de chauffe de préformes 12 décrivant un "U" depuis une entrée E jusqu'à une sortie S du four.

En variante, le four 10 est un four circulaire, c'est-à-dire un four présentant un parcours de chauffe en "C" globalement circulaire.

Avantageusement, le four 10 est un four de conception modulaire. Par four 10 modulaire, on entend un four comportant au moins un nombre [n] déterminé de modules, un module est par exemple définit par rapport aux moyens de chauffage, lesquels moyens de chauffage se présentent généralement sous la forme d'un sous-ensemble ou bloc comportant par exemple des lampes à rayonnement infrarouge qui sont superposées verticalement les unes au dessus des autres.

De manière connue, un four 10 comporte plus ou moins de modules de chauffage en fonction du temps de chauffage nécessaire à l'application, ce qui détermine la longueur du four 10 ou d'une manière plus générale son encombrement.

En effet, le temps de conditionnement thermique est variable d'une préforme 12 à une autre, notamment en fonction de son épaisseur de paroi, du matériau, etc.

Les préformes 12 en matière thermoplastique, par exemple en polyéthylène téréphtalate (PET), sont destinées à être transformées en récipients après leur conditionnement thermique dans le four 10.

Dans la suite de la présente description, le terme "préforme" désigne de manière non limitative aussi bien une ébauche qu'un récipient intermédiaire, comme le terme "soufflage" désigne également pour simplifier une opération d'étirage-soufflage.

On a représenté en détail sur la figure 1, au moyen d'un agrandissement, un exemple de préforme 12 d'axe O vertical qui présente ici globalement une forme d'éprouvette.

Pour le conditionnement thermique, on distingue tout particulièrement deux parties dans la préforme 12, à savoir respectivement une première partie à sa forme définitive qui est constituée par un col 14 et une collerette 16, et une deuxième partie qui est constituée par un corps 18 et un fond 20.

En effet, la première partie 14, 16 à sa forme définitive ne doit pas être chauffée, seule la deuxième partie 18, 20 est destinée à être conditionnée thermiquement dans le four 10.

Comme illustré par la figure 1, le corps 18 tubulaire de la préforme 12 est fermé à une extrémité supérieure par le fond 20 hémisphérique et comporte à son extrémité inférieure un col 14 qui a déjà la forme définitive du goulot du récipient, la collerette 16 annulaire qui s'étend radialement vers l'extérieur délimitant globalement lesdites première et deuxième parties.

Telqu'expliqué en préambule, le conditionnement thermique mis en oeuvre dans le four 10 a pour objet de préparer la préforme 12 en vue de sa transformation, par soufflage et/ou par remplissage au moyen d'un fluide afin de conformer chaque préforme 12 en un récipient.

Dans le four 10, chaque préforme 12 est transportée par l'intermédiaire d'un dispositif 22 de transport le long d'un parcours de chauffe suivant les flèches représentées sur la figure 1, soit d'amont vers l'aval depuis l'entrée E du four où la préforme pénètre généralement "froide" (à température ambiante) jusqu'à la sortie S du four où chaque préforme 12 dont la deuxième partie a été chauffée est alors prête pour être transformée en récipient.

Dans un four 10 de conditionnement thermique tel que représenté à la figure 1, le parcours de chauffe comporte successivement une première zone de chauffage, dite de pénétration, formée par la portion rectiligne aller du parcours débutant à l'entrée E, une première zone, dite de stabilisation, formée par la portion curviligne et une deuxième zone de chauffage, dite de distribution, formée par la portion rectiligne retour du parcours s'achevant à la sortie S et une deuxième zone de stabilisation constituée par le parcours qu'effectuent les préformes entre la sortie S et l'unité de transformation telle qu'une souffleuse.

La première zone de chauffage de pénétration est destinée à réaliser un pré-chauffage de la deuxième partie 18, 20 de la préforme 12, par exemple jusqu'à une température de l'ordre de 50°C à 80°C, et la deuxième zone de chauffage de distribution est destinée à réaliser le chauffage final, par exemple à une température de l'ordre de 90°C à 110°C.

Les températures sont données à titre non limitatif et sont notamment fonction du matériau constitutif de la préforme 12, ici du PET.

La première zone de stabilisation interposée entre les première et deuxième zones de chauffage, est destinée à permettre, par la temporisation en résultant, une répartition homogène de la chaleur dans l'ensemble de la deuxième partie 18, 20 de la préforme 12.

Comme on peut le voir sur la figure 2, le dispositif 22 de transport comporte des moyens 24 de préhension aptes à coopérer individuellement avec le col 14 de chaque préforme 12 pour maintenir la préforme 12 dans une position déterminée, ici verticalement col en bas (ou en variante col en haut).

Les moyens 24 de préhension du type mandrin sont liés en déplacement au dispositif 22 de transport et sont avantageusement aptes à entraîner les préformes 12 en rotation sur elle-même autour de leur axe O principal.

Le dispositif 22 de transport est par exemple constitué par une chaîne à maillons ou une courroie qui est entraîné en boucle fermée entre deux roues 26 dont l'une au moins est entraînée en rotation par des moyens motorisés (non représentés).

L'entraînement par le dispositif 22 de transport détermine ainsi la vitesse V de déplacement dans le four des préformes 12 supportées par les moyens 24 de préhension, soit incidemment la durée totale de conditionnement thermique ou plus particulièrement la durée de temporisation correspondant au laps de temps mis par une préforme 12 pour parcourir la première zone de stabilisation.

Pour éviter toute déformation de la première partie 14, 16 de la préforme 12 lors du chauffage dans le four, le col 14 et la collerette 16 de chaque préforme 12 sont protégés par des moyens 28 de protection (figures 2 et 3), tels que des rampes, qui s'étendent longitudinalement sur au moins une partie du parcours de chauffe, en particulier les première et deuxième zones de chauffage.

Le four 10 comporte des moyens 30 chauffage qui sont de préférence associés à des réflecteurs 32.

Les première et deuxième zones de chauffage forment respectivement un tunnel de chauffage qui est formé longitudinalement d'un côté par une paroi chauffante comportant les moyens 30 de chauffage et de l'autre par une paroi réfléchissante formée par les réflecteurs 32 qui sont agencés transversalement en vis-à-vis desdits moyens 30 de chauffage.

Comme on peut le voir sur la figure 1, les moyens 30 de chauffage et les réflecteurs 32 sont disposés le long d'au moins une partie d'un parcours de chauffe, ici des première et deuxième zones de chauffage, la première zone de stabilisation étant dépourvue de moyens 30 de chauffage.

Les moyens 30 de chauffage sont par exemple formés par des diodes ou des lampes à rayonnements infrarouges référencées IR1, IR2, IR3, ..., IRn sur les figures 2 et 3, qui sont usuellement utilisés dans ce domaine d'application pour le chauffage des préformes 12.

De préférence, les réflecteurs 32 sont ajourés par des ouvertures 34 pour permettre le passage de l'air de refroidissement des deuxièmes parties 18, 20 des préformes 12 qui est délivré par un système 36 de refroidissement.

Le système 36 de refroidissement comporte au moins un dispositif de refroidissement apte à refroidir par air au moins la deuxième partie 18, 20 des préformes 12.

Avantageusement, le système 36 de refroidissement est cependant apte à refroidir respectivement les premières parties et les deuxièmes parties des préformes 12.

En effet, les cols 14 des préformes 12 se trouvent hors du tunnel comportant les moyens 30 de chauffage et bien que protégés par les moyens 28 des rayonnements et de la chaleur, les cols 14 doivent être maintenus en deçà d'une certaine température par refroidissement.

Pour ce faire, le refroidissement de la première partie 14, 16 des préformes 12 est assuré également par le système 36 de refroidissement par air équipant le four 10, seul ou en combinaison avec d'autres moyens complémentaires de refroidissement.

Avantageusement, le système 36 de refroidissement comporte des moyens 38 de refroidissement, par exemple par la mise en circulation d'un fluide caloporteur (eau) dans des tuyaux intégrés aux rampes de protection formant les moyens 28.

Les premières parties 14, 16 des préformes 12 sont de préférence refroidis par au moins un dispositif de refroidissement du système 36 de refroidissement et par des tels moyens 38 de refroidissement à fluide caloporteur.

Le système 36 de refroidissement comporte au moins un premier dispositif 40 de refroidissement destiné à refroidir la première partie 14, 16 des préformes 12 présentant leur forme définitive et un deuxième dispositif 42 de refroidissement destiné à refroidir par air la deuxième partie 18, 20 des préformes 12.

Comme on peut le voir sur la figure 2, le deuxième dispositif 42 de refroidissement du système 36 de refroidissement est avantageusement indépendant du premier dispositif 40 de refroidissement de manière à découpler le refroidissement de chacune des première et deuxième parties des préformes 12.

Selon une variante qui ne fait pas partie de l'invention, le système 36 de refroidissement comporte un seul dispositif de refroidissement par air destiné à refroidir les première et deuxième parties des préformes 12 respectivement.

De préférence, le système 36 de refroidissement comporte pour refroidir les premières parties 14, 16 des préformes 12 un premier dispositif 40 de refroidissement (indépendant d'un deuxième dispositif 42) et des moyens 38 de refroidissement.

Le premier dispositif 40 de refroidissement par air comporte des moyens 44 de ventilation qui sont agencés dans un conduit 46, dit premier, et qui sont entraînés en rotation par un moteur 48.

De préférence, les moyens 44 de ventilation sont agencés à l'entrée du premier conduit 46 et sont aptes à aspirer un flux A d'air ambiant à travers des moyens 50 de filtration.

Le premier conduit 46 achemine le flux A d'air de refroidissement jusqu'aux premières parties 14, 16 des préformes 12 en circulation dans le four 10 et les moyens 24 de préhension.

Le deuxième dispositif 42 de refroidissement, indépendant du premier dispositif 40 de refroidissement, comporte des moyens 52 de ventilation qui sont agencés dans un deuxième conduit 54 et entraînés en rotation par un moteur 56.

De préférence, les deuxièmes moyens 52 de ventilation sont agencés à l'entrée du deuxième conduit 54 et sont aptes à aspirer un flux B d'air ambiant à travers des moyens 50 de filtration.

Le deuxième conduit 54 achemine le flux B d'air de refroidissement jusqu'aux deuxièmes parties 18, 20 des préformes 12 en circulation dans le four 10 afin de les refroidir.

Les moyens 44, 52 de ventilation sont ici agencés en amont des préformes 12 de sorte que l'air de refroidissement est respectivement soufflé sur les première et deuxième parties des préformes 12.

En variante, les moyens 44 et/ou 52 de ventilation sont agencés en aval des préformes 12 de manière à provoquer une circulation d'air de refroidissement par dépression dans le tunnel.

Le système 36 de refroidissement comporte au moins un dispositif 42 de refroidissement apte à refroidir par air au moins la deuxième partie 18, 20 des préformes 12, ledit dispositif 42 de refroidissement comportant au moins des moyens 52 de ventilation aptes à délivrer un débit donné d'air de refroidissement et des moyens 58, 64 pour faire varier sélectivement, le long du parcours de chauffe des préformes 12, au moins le débit de l'air de refroidissement délivré par lesdits moyens 52 de ventilation pour le refroidissement desdites deuxièmes parties 18, 20 des préformes 12.

Avantageusement, le débit avec lequel l'air de refroidissement est délivré à la deuxième partie 18, 20 d'une préforme 12 parcourant un tronçon donné du parcours de chauffe est au moins différent du débit avec lequel l'air de refroidissement est délivré à la deuxième partie 18, 20 de cette préforme 12 parcourant un autre tronçon dudit parcours.

Par conséquent et conformément à l'invention, le débit d'air de refroidissement délivré aux deuxièmes parties 18, 20 des préformes 12 par le deuxième dispositif 42 de refroidissement du système 36 n'est pas constant tout au long du parcours de chauffe effectué à travers le four 10, depuis l'entrée E jusqu'à la sortie S.

Avantageusement, le deuxième dispositif 42 de refroidissement comporte des moyens 52 de ventilation qui sont répartis tout au long du parcours de chauffe et qui sont aptes à être commandés individuellement pour faire varier sélectivement le débit d'air de refroidissement en fonction de la position occupée par la préforme au cours du parcours de chauffe.

De préférence, le four 10 est de conception modulaire et comporte au moins un nombre [n] de modules M comportant au moins lesdits moyens 30 de chauffage disposés le long de tout ou partie du parcours de chauffe et les réflecteurs 32 associés.

Tel qu'illustré sur la figure 1, le four 10 comporte ainsi des modules M1, M2, M3 ... Mi, pour former les première et deuxième zones de chauffage du parcours de chauffe.

Par convention, on définit un bloc d'un premier type (en série) comme comportant au moins deux modules M agencés en série l'un après l'autre suivant le sens du parcours de chauffe des préformes 12 dans le four 10 de manière que les deuxièmes parties 18, 20 des préformes 12 soient chauffées consécutivement par les moyens 30 de chauffage de chaque module M du bloc du premier type "en série".

Avantageusement, les moyens pour faire varier sélectivement le débit d'air de refroidissement sur les deuxièmes parties 18, 20 des préformes 12 sont mutualisés entre au moins deux modules M de chauffage formant un bloc du premier type (en série).

Ainsi, le débit de l'air de refroidissement délivré aux préformes 12 traversant les deux modules M formant le bloc du premier type est alors le même.

Par convention encore, on définit pour le four 10 modulaire un bloc d'un second type (en parallèle) comportant au moins deux modules M agencés en parallèle dans lesquels les préformes 12 circulent en sens inverse.

Typiquement, tel sera le cas de deux modules M alignés transversalement et appartenant respectivement à la première zone de chauffage de pénétration pour l'un et à la deuxième zone de chauffage pour l'autre.

En référence à la figure 2, on décrira maintenant un premier mode de réalisation des moyens pour faire varier sélectivement le débit d'air de refroidissement sur au moins la deuxième partie des préformes le long du parcours de chauffe.

Avantageusement, les moyens pour faire varier sélectivement le débit d'air de refroidissement sont constitués par au moins un variateur 58 de vitesse qui est associé à au moins un des moyens 52 de ventilation du deuxième dispositif 42 de refroidissement.

Dans ce premier mode de réalisation, la variation du débit d'air de refroidissement le long du parcours est obtenue en commandant sélectivement ledit variateur 58 de vitesse associé audit moyen 52 de ventilation, indépendamment des autres moyens 52 de ventilation.

De préférence, chacun des moyens 52 de ventilation est associé à un variateur 58 de manière à pouvoir être commandé indépendamment des autres moyens 52 de ventilation du parcours de chauffe.

Comme on peut le voir sur la figure 1, un ensemble moyens 52 de ventilation/variateur 58 équipe avantageusement chacun des modules M du four 10.

Le variateur 58 de vitesse agit sur le moteur 56 d'entraînement du moyen 52 de ventilation auquel il est associé de manière que ledit moyen 52 de ventilation délivre de l'air de refroidissement avec un débit qui soit différent du débit d'air délivré par les autres moyens 52 de ventilation.

Le débit maximal d'air de refroidissement correspondant à 100% étant déterminé par la puissance maximale du moteur 56 d'entraînement du moyen 52 de ventilation, il est possible grâce au variateur 58 de vitesse de commander sélectivement le moyen 52 de ventilation qui lui est associé pour obtenir la délivrance d'un débit d'air de refroidissement qui sera compris entre 0 et 100%, par exemple un débit d'air égal 30%, 50% ou 80% sur un tronçon donné du parcours de chauffe.

En commandant indépendamment chacun des moyens 52 de ventilation du four 10 délivrant l'air de refroidissement, il est possible de faire varier sélectivement et précisément le débit de l'air de refroidissement délivré par les moyens 52 de ventilation aux deuxième parties 18, 20 le long du parcours de chauffe.

A titre d'exemple non limitatif, on a découpé le parcours de chauffe dans le four 10 en une succession de tronçons pour illustrer la mise en oeuvre de l'invention selon le premier mode de réalisation.

Comme on peut le voir sur la figure 1, le parcours de chauffe comporte par exemple un premier tronçon T1 comprenant les modules M1 et M2, puis un deuxième tronçon T2 comprenant les modules M3 à M6.

Les premier et deuxième tronçons T1 et T2 correspondent à ladite première zone de chauffage de pénétration des deuxièmes parties 18, 20 des préformes 12.

Le parcours de chauffe se poursuit ensuite par un troisième tronçon T3 correspondant ici à la première zone de stabilisation qui ne comporte pas de moyens 30 de chauffage.

Selon les applications, de l'air de refroidissement est ou non appliqué sur les deuxièmes parties 18, 20 des préformes 12 dans cette première zone de stabilisation.

De préférence, le four 10 est dépourvu ici de tels moyens 52 de ventilation dans la première zone de stabilisation.

Après le troisième tronçon T3, le parcours de chauffe comporte encore dans cet exemple un quatrième tronçon T4 et un cinquième tronçon T5 qui ajoutés correspondent à la deuxième zone de chauffage de distribution.

Le quatrième tronçon T4 comprend les modules M7 à M10 tandis que le cinquième tronçon T5 comprend les derniers modules M11 et M12 avant la sortie S du four 10.

De préférence, chaque module M du four 10 est équipé individuellement, outre de moyens 30 de chauffage, de moyens 52 de ventilation entraînés par un moteur 56 apte à être commandé par un variateur 58 de vitesse pour délivrer par un conduit 54 l'air de refroidissement sur une portion du parcours de chauffe.

A titre d'exemple non limitatif de la variation du débit d'air de refroidissement au cours du parcours de chauffe, le variateur 58 associé au moteur 56 du moyen 52 de ventilation du premier module M1 est réglé avec une consigne correspondant à une puissance comprise entre 0 et 30% de la puissance maximale, par exemple 10%, de manière à délivrer par le conduit 54 associé un débit quasi-nul ou faible d'air de refroidissement.

Avantageusement, la même consigne comprise entre 0 et 30% est appliquée pour régler le variateur 58 associé au moteur 56 du moyen 52 de ventilation du deuxième module M2.

Dans ce cas le débit de l'air de refroidissement est alors identique sur le premier tronçon T1 comprenant lesdits modules M1 et M2.

Le variateur 58 associé au moteur 56 du moyen 52 de ventilation de chacun des modules M3 à M6 que comprend le deuxième tronçon T2 est réglé avec une consigne différente, par exemple supérieure, correspondant à une puissance comprise entre 30 et 60% de la puissance maximale, telle que de 40% de la puissance maximale.

De la même manière, le variateur 58 associé au moteur 56 de chacun des moyens 52 de ventilation des modules suivants M7 à M10 que comprend le quatrième tronçon T4 est également réglé avec une consigne différente de celles de la première zone de chauffage de pénétration (T1 + T2), par exemple une consigne correspondant à une puissance comprise entre 50% et 80% de la puissance maximale, telle que de 70%.

Enfin, le variateur 58 associé au moteur 56 de chacun des moyens 52 de ventilation des modules M11 et M12 que comprend le cinquième tronçon T5 est réglé avec une consigne correspondant à une puissance de 80% ou 100% de la puissance maximale.

En résumé, pour l'exemple ci-dessus, le débit de l'air de refroidissement va, par rapport au débit maximal déterminant la référence de 100% obtenue avec la puissance maximale du moteur 56 entraînant chacun des moyen 52 de ventilation, successivement varier au cours du parcours de chauffe pour être égal à :
- 10% sur le premier tronçon T1 (modules M1 et M2)
- 40% sur le deuxième tronçon T2 (modules M3 à M6)
- 0% sur le troisième tronçon T3 de stabilisation
- 70% sur le quatrième tronçon T4 (modules M7 à M10)
- 90% sur le cinquième tronçon T5 (modules M11 et M12).

Avantageusement, le débit d'air de refroidissement délivré dans les premiers modules, ici M1 et M2 dans l'exemple précité, est quasi-nul ou faible dès lors que les préformes 12 pénètrent "froides" en entrée E du four 10, généralement à une température ambiante de l'ordre de 20°C.

Les risques de cristallisation des deuxièmes parties 18, 20 des préformes 12 sont par conséquent estimé comme égal à zéro lorsque débute le chauffage du conditionnement thermique.

Pour autant, dans les fours 10 selon l'état de la technique, de l'air de refroidissement était soufflé par le système 36 de refroidissement avec un débit constant de l'entrée à la sortie.

Par conséquent, en raison de l'absence ou le faible débit d'air de refroidissement sur ce premier tronçon T1 pour faire référence à l'exemple précité, la puissance de chauffage des moyens 30 de chauffage est avantageusement réduite sans que n'en soit affecté au final le conditionnement thermique.

Avantageusement, on réduit alors la consommation d'énergie électrique dans ces modules, tels que M1 et M2, et ce faisant on améliore le rendement du four 10.

Avantageusement, l'ensemble des moyens comme les moyens 52 de ventilation, les moteurs 56 et les variateurs 58 sont donc susceptibles d'être supprimés dans les premiers modules comme M1 et M2 du parcours de chauffe au bénéfice notamment d'une réduction des coûts, en particulier du matériel, de son entretien.

Lorsque la ventilation pour le refroidissement par air des deuxièmes parties 18, 20 des préformes 12 est supprimée, par exemple mais de manière non limitative sur les premiers modules M ou un premier tronçon T1 déterminé, les réflecteurs 32 sont alors avantageusement remplacés.

En effet, il n'est alors pas nécessaire - en l'absence de ventilation pour le refroidissement par air - de disposer d'un réflecteur 32 dit "soufflant", c'est-à-dire généralement ajouré par de multiples ouvertures 34 pour permettre le passage de l'air de refroidissement.

Avantageusement, on utilise des réflecteurs présentant notamment une surface pleine qui sont susceptibles d'accroître les réflexions de rayonnements et par leur plus grande efficacité le rendement global du four 10.

Avantageusement, les matériaux utilisés pour de tels réflecteurs sont déterminés pour optimiser les réflexions, notamment des rayonnements infrarouges des moyens 30 de chauffage, et cela en s'affranchissant alors de tout compromis pour assurer également la fonction de ventilation.

De préférence, ces réflecteurs sont réalisés dans des matériaux tel que du Fibrosil ou encore en céramique et non plus en aluminium comme les réflecteurs 32 conventionnels de type "soufflant".

De plus, on relèvera qu'en l'absence de refroidissement des réflecteurs 32 réalisés par exemple en aluminium sont susceptibles de ne pas résister thermiquement aux températures élevées rencontrées dans un tel four 10.

Avantageusement, des réflecteurs réalisés dans les matériaux précités (Fibrosil, Céramique, ...) présentent une excellente tenue thermique, y compris en l'absence ou avec un faible refroidissement.

Bien entendu, l'utilisation de tels réflecteurs n'est nullement limitée au cas de suppression de la ventilation de refroidissement mais de tels réflecteurs sont encore susceptibles d'être utilisés avec tout système 36 de refroidissement,

Par comparaison, bien que moins ventilant que des réflecteurs 32 "soufflant" présentant des ouvertures 34 du fait des surfaces pleines, de tels réflecteurs sont susceptibles d'être agencés en laissant des passages pour l'air de refroidissement entre deux réflecteurs consécutifs.

De préférence, des moyens particuliers sont alors mis en oeuvre pour améliorer la diffusion de l'air de refroidissement à partir d'un tel passage débouchant entre deux réflecteurs.

En variante, il est également possible de réduire les coûts - non pas en supprimant - mais en mutualisant des moyens, tels qu'un moyen 52 de ventilation, un moteur 56 et un variateur 58, entre au moins deux modules consécutifs formant un bloc en série, tel que les modules M1 et M2, ou encore un bloc en parallèle, tel que les modules M5 et M8.

En variante, la mutualisation des moyens 52, 56, 58 est réalisée sur un bloc en série et un bloc en parallèle, soit un groupe d'au moins quatre modules M adjacents deux à deux.

Ainsi, les moyens 52, 56, 58 du deuxième dispositif 42 de refroidissement sont avantageusement mutualisés ou regroupés pour deux modules ou plus dans les tronçons suivants T2 à T5.

La réduction incidente des coûts du fait d'une telle mutualisation des moyens sera plus particulièrement recherchée lorsque le four 10 est équipé d'un premier dispositif 40 de refroidissement par air, indépendant du deuxième dispositif 42, pour le refroidissement des premières parties 14, 16 des préformes 12.

Cependant, lorsque le premier dispositif 40 de refroidissement est constitué par au moins un dispositif de refroidissement par air, les moyens 44, 48 sont avantageusement mutualisés entre des blocs série et/ou parallèle dès lors que le débit d'air de refroidissement délivré pour refroidir les premières parties 14, 16 des préformes 12 est constant tout au long du parcours de chauffe.

En variante, le débit d'air de refroidissement délivré par le premier dispositif 40 de refroidissement des premières parties 14, 16 des préformes 12 varie également le long du parcours de chauffe, notamment mais non exclusivement si le système 36 de refroidissement du four 10 ne comporte qu'un seul dispositif de refroidissement par air pour toute la préforme 12, ledit premier dispositif 40 étant alors constitué par le deuxième dispositif 42 et vice et versa.

Toutefois, on comprendra que les possibilités de faire varier sélectivement le débit d'air de refroidissement des deuxièmes parties 18, 20 des préformes 12 au cours du parcours de chauffe seront d'autant plus importantes que ne le seront les moyens 52, 56, 58 du deuxième dispositif 42 de refroidissement équipant le four 10.

Ainsi, par comparaison avec l'exemple précité, le nombre de tronçons T1 à T5 est susceptible de varier pour chaque application, de même que l'on rappellera que le nombre de modules M dans un four 10 est également variable en fonction des applications.

Dans l'exemple donné précédemment, les débits d'air de refroidissement varient de manière croissante au fur et à mesure du parcours de chauffe suivi par les préformes 12 toutefois il est rappelé qu'il ne s'agit que d'un exemple non limitatif indiqué aux fins d'explications.

De plus, le fait que dans au moins un module M donné ou que sur un tronçon déterminé du parcours de chauffe, un refroidissement par air d'au moins lesdites deuxièmes parties des préformes 12 soit mis en oeuvre n'emporte pas nécessairement pour conséquence que les moyens 30 de chauffage y soient actifs dès lors que des tronçons de stabilisation sont avantageusement susceptibles d'être aménagés tout au long du parcours de chauffe, en alternance avec ceux de chauffage, et donc pas seulement dans le troisième tronçon T3 correspondant au virage du four 10 représenté à la figure 1.

Avantageusement, chaque variateur 58 de vitesse est commandé par l'intermédiaire d'au moins une unité 60 de commande pour agir sur un moteur 56 d'entraînement dudit moyen 52 de ventilation associé de manière à obtenir la variation sélective du débit d'air pour le refroidissement des deuxièmes parties des préformes 12 au cours du parcours de chauffe.

Selon le procédé de commande du deuxième dispositif de refroidissement, les différentes consignes correspondant aux débits d'air de refroidissement souhaités au long du parcours de chauffe sont entrées dans l'unité 60 de commande.

De préférence, l'unité 60 de commande est également apte à commander les moyens 44 de ventilation du premier dispositif 40 de refroidissement, qui sont entraînés par le moteur 48.

Avantageusement, le premier dispositif 40 de refroidissement comporte un variateur (non représenté) qui est associé au moteur 48 d'entraînement des moyens 44 de ventilation, ledit variateur étant alors commandé par l'unité 60 de commande, en variante par une unité de commande distincte.

En effet selon l'invention, le procédé de commande du dispositif 42 de refroidissement, équipant le four 10 de conditionnement thermique, est destiné à permettre de refroidir sélectivement par air les deuxièmes parties 18, 20 des préformes 12 circulant dans le four 10 suivant un parcours de chauffe.

Avantageusement, le procédé de commande comporte au moins une étape consistant à commander sélectivement les moyens 58 associés aux moyens 52 de ventilation dudit dispositif pour faire varier le débit de l'air de refroidissement délivré auxdites deuxièmes parties des préformes 12 le long d'au moins une partie du parcours de chauffe.

Avantageusement, le procédé de commande du dispositif de refroidissement est encore perfectionné et ne se limite pas à commander le dispositif 42 de refroidissement en fonction des seules consignes introduites initialement dans l'unité 60 de commande pour faire varier le débit au cours du parcours de chauffe.

Avantageusement, le four 10 comporte des moyens 62 de mesure de température aptes à mesurer la température interne et/ou la température externe de la paroi de la deuxième partie 18, 20 des préformes 12 en au moins une position déterminée le long du parcours de chauffe et à fournir au moins un signal représentatif de l'une desdites températures mesurées ou du gradient correspondant à la différence entre lesdites températures interne et externe de la paroi.

Le procédé de commande est alors susceptible d'asservir le débit d'air de refroidissement suivant une boucle fermée exploitant notamment la température interne et/ou externe de la paroi de la deuxième partie des préformes 12.

De préférence, les signaux correspondant aux températures interne et externe sont transmis à ladite au moins une unité 60 de commande qui détermine alors le gradient (ou delta) correspondant à la différence entre lesdites températures interne et/ou externe de la paroi.

Les moyens 62 de mesure de température sont par exemple constitués par au moins un pyromètre, en variante une caméra thermique, utilisés en particulier pour la mesure de la température externe de la paroi.

Avantageusement, les moyens 62 de mesure de température utilisés comportent encore, tout particulièrement pour la mesure de la température interne, des moyens du type de ceux (sondes) décrits dans le document WO-A1-2010/031923 auquel on se reportera pour de plus amples détails.

Avantageusement, l'unité 60 de commande est apte à piloter lesdits moyens constitués par les variateurs 58 de vitesse pour faire varier sélectivement le débit d'air de refroidissement délivré aux deuxièmes parties des préformes le long du parcours de chauffe et cela en fonction au moins dudit signal représentatif de la température interne et/ou externe, de manière à réguler le conditionnement thermique des préformes 12 le long du parcours de chauffe en pilotant en temps réel lesdits moyens et subséquemment les moyens 52 de ventilation.

En référence à la figure 3, on décrira maintenant un deuxième mode de réalisation, qui ne fait pas partie de l'invention, des moyens pour faire varier sélectivement le débit d'air de refroidissement sur au moins la deuxième partie des préformes 12 le long du parcours de chauffe.

La description du deuxième mode de réalisation sera avantageusement effectuée par comparaison avec le premier mode de réalisation.

Avantageusement, les moyens pour faire varier le débit d'air de refroidissement sont constitués au moins par des moyens 64 d'obturation aptes à être commandés en position pour faire varier sélectivement, en fonction du tronçon du parcours de chauffe, le débit d'air de refroidissement délivré aux deuxièmes parties 18, 20 des préformes 12.

Dans le premier mode de réalisation, la variation du débit d'air de refroidissement est obtenue en agissant, par l'intermédiaire du variateur 58 couplé au moteur 56, directement sur les moyens 52 de ventilation qui sont à l'origine de la création du flux d'air de refroidissement.

Dans ce deuxième mode de réalisation, chaque moyen 52 de ventilation provoque la mise en circulation d'un débit donné d'air de refroidissement dans le conduit 54 associé du deuxième dispositif 42 de refroidissement, débit que lesdits moyens 64 d'obturation sont susceptibles de faire varier sélectivement.

Ainsi, les moyens 64 d'obturation sont commandés sélectivement en position pour contrôler le débit de l'air de refroidissement destiné à être délivré aux deuxièmes parties 18, 20 des préformes 12.

Avantageusement, les moyens 64 d'obturation sont agencés au moins dans le conduit 54 du deuxième dispositif 42 de refroidissement destiné à acheminer l'air de refroidissement jusqu'aux deuxièmes parties 18, 20 des préformes 12.

De préférence et tel qu'illustré sur la figure 3, les moyens 64 d'obturation sont réalisés sous la forme d'au moins un volet.

Avantageusement, les moyens 64 d'obturation sont agencés en amont des réflecteurs 32 faisant face aux moyens 30 de chauffage et sont montés mobiles en position pour ouvrir ou fermer sélectivement tout ou partie les ouvertures 34 de passage de l'air de refroidissement par lesquelles l'air de refroidissement est délivré aux deuxièmes parties des préformes 12.

Comme illustré sur la figure 3, les moyens 64 d'obturation sont par exemple constitués par au moins un volet agencé dans le conduit 54 associé à au moins un module M du four 10, de préférence au plus près des réflecteurs 32.

Le volet 64 est monté mobile en rotation entre au moins deux positions extrêmes, une première position P1 dans laquelle le volet n'obture pas la section du conduit 54 et une deuxième position P2 dans laquelle le volet obture totalement le conduit 54, lesdites positions P1 et P2 étant représentées en trait pointillé sur la figure 3.

La première position P1 correspond à la position dans laquelle la totalité soit 100% du débit de l'air de refroidissement généré par les moyens 52 de ventilation est délivré tandis que la deuxième position P2 correspond à la position du volet 64 interdisant toute circulation d'air dans le conduit 54 en aval du volet 64 de sorte que le débit d'air de refroidissement délivré au moins aux deuxièmes parties 18, 20 des préformes 12 est égal à zéro, soit 0%.

Avantageusement, le déplacement du volet 64 est commandé en rotation entre les positions P1 et P2 par un actionneur 66 pour positionner le volet 64 dans une position intermédiaire déterminée entre lesdites positions P1 et P2 correspondant au débit d'air de refroidissement souhaité entre 100% et 0%.

De préférence, le volet 64 est monté pivotant autour de moyens 68 d'articulation.

Ainsi, en réglant la position de chaque volet 64 par exemple associé à un des modules M, on détermine la variation du débit de l'air de refroidissement le long du tronçon associé du parcours de chauffe.

Selon une variante non représentée, le volet 64 est monté coulissant entre au moins des positions extrêmes P1 et P2 correspondant respectivement à un débit d'air de refroidissement de 100% et de 0%, de préférence le volet 64 est monté mobile en translation selon la direction longitudinale parallèlement aux zones de chauffage du parcours de chauffe.

Le volet 64 coulissant est par exemple disposé transversalement en arrière du réflecteur 32 et est conformé pour obturer une ou des ouvertures 34 ménagées dans ledit réflecteur 32 pour permettre le passage de l'air de refroidissement devant être délivré aux deuxièmes parties 18, 20 des préformes 12 avec un débit déterminé, fonction de la position relative du volet 64.

De préférence, chaque module M du four 10 comporte au moins un conduit 54 pour délivrer de l'air de refroidissement et ledit au moins un conduit 54 (en variante le réflecteur 32) comporte un moyen 64 d'obturation apte à faire varier le débit d'air en fonction de sa position.

Par comparaison avec le premier mode de réalisation, les moyens 64 d'obturation, tels qu'un volet, sont indépendants des moyens 52 de ventilation créant le débit d'air de refroidissement de manière que les moyens 52 de ventilation et/ou les moteurs 56 sont susceptibles d'être mutualisés, en série et/ou en parallèle, entre au moins deux modules M et cela tout en conservant la possibilité de régler individuellement le débit pour chacun des modules M grâce au seul volet 64.

En effet, dans l'hypothèse où la consigne de puissance du moteur 56 d'entraînement des moyens 52 de ventilation est égale au maximum soit un débit d'air de 100%, le débit d'air de refroidissement finalement délivré aux deuxièmes parties 18, 20 des préformes 12 est alors déterminé par la seule position des moyens 64 d'obturation.

La variation du débit d'air de refroidissement au cours du parcours de chauffe est ainsi obtenue en réglant sélectivement les différentes positions de l'ensemble des moyens 64 d'obturation, avantageusement associés chacun à un module M du four 10.

Bien entendu, le volet ne constitue qu'un exemple non limitatif du type de moyens 64 d'obturation pouvant être mis en oeuvre pour faire varier le débit au cours du parcours de chauffe, en variante on pourrait encore utiliser une vanne ou tout autre moyen analogue.

Les moyens 64 d'obturation du deuxième dispositif 42 de refroidissement sont ainsi susceptibles d'être réglés initialement chacun dans une position déterminée grâce à l'actionneur 66 afin d'obtenir ensuite en fonctionnement la variation souhaitée du débit d'air le long du parcours de chauffe.

Avantageusement, une unité 70 de commande du deuxième dispositif 42 est apte à piloter lesdits moyens 64 pour faire varier sélectivement le débit d'air de refroidissement sur les deuxièmes parties 18, 20 des préformes 12 en fonction au moins d'un signal représentatif de la température, de manière à réguler le conditionnement thermique des préformes 12 le long du parcours de chauffe en pilotant en temps réel la position desdits moyens 64.

De préférence, ledit au moins un signal est représentatif de la température interne et/ou externe de la paroi, avantageusement du gradient de température entre les surfaces externe et interne de la paroi du corps 18 et du fond 20 formant la deuxième partie.

Bien entendu, les premier et deuxième modes de réalisation qui viennent d'être décrits ne sont que des exemples non limitatif de mise en oeuvre des enseignements de la présente divulgation.

L'invention concerne un procédé de commande d'un dispositif 42 de refroidissement qui, équipant un four 10 de conditionnement thermique, est destiné à refroidir par air au moins les deuxièmes parties 18, 20 des préformes 12 circulant dans le four 10 suivant un parcours de chauffe.

Le procédé de commande comporte au moins une étape consistant à commander des moyens 58, 64 pour faire varier sélectivement le débit de l'air de refroidissement délivré au moins auxdites deuxièmes parties 18, 20 des préformes 12 le long du parcours de chauffe.

Dans le premier mode, l'étape de commande consiste donc à régler individuellement chaque variateur 58 pour déterminer le débit d'air de refroidissement qui sera produit par les moyens 52 de ventilation associés, entraînés par un moteur 56, de manière à faire avantageusement varier ledit débit d'air le long du parcours de chauffe suivant une séquence déterminée par le réglage de chaque variateur 58.

En effet, en réglant sélectivement la consigne de chaque variateur 58, on détermine le débit d'air de refroidissement qui sera délivré aux deuxièmes parties 18, 20 des préformes lorsque lesdites préformes 12 circuleront sur le tronçon correspondant du parcours de chauffe.

De la même manière pour le deuxième mode, qui ne fait pas partie de l'invention, l'étape de commande consiste à commander individuellement chaque moyen 64 d'obturation, tel qu'un volet ou une vanne, pour régler le débit d'air de refroidissement voulu sur le tronçon du parcours de chauffe correspondant et ainsi, en réglant sélectivement chaque moyen 64 de faire varier ledit débit d'air de refroidissement le long du parcours de chauffe suivant une séquence déterminée par le réglage de chaque actionneur 66 des moyens 64 d'obturation.

Avantageusement, le procédé de commande comporte au moins une étape de régulation consistant à piloter en temps réel lesdits moyens 58, 60, 66, 70 pour réguler, en fonction d'au moins une donnée, le débit d'air pour le refroidissement d'au moins les deuxièmes parties 18, 20 des préformes 12 qui varie le long du parcours de chauffe.

De préférence, ladite au moins une donnée exploitée pour la commande est constituée par au moins un signal représentatif de la température interne et/ou externe de la paroi ou du gradient correspondant à la différence entre lesdites températures interne et externe.

Avantageusement, le procédé comporte une étape de mesure consistant à mesurer la température interne et/ou externe de la paroi de chaque préforme 12. De préférence, on effectue une mesure en des points multiples, notamment selon la direction verticale sur la hauteur du corps 18 jusqu'au fond 20 de la préforme 12 et cela grâce à des moyens de mesure de température du type décrit précédemment, tels qu'un pyromètre, une caméra thermique ou des sondes.

Avantageusement, les étapes du procédé de commande sont intégrées dans le procédé plus général de conditionnement thermique des préformes 12 dans un tel four 10.

Avantageusement, une étape de régulation des moyens 30 de chauffage pour faire varier sélectivement la puissance de chauffe sur au moins une partie du parcours de chauffe est également mise en oeuvre.

L'étape de régulation des moyens 30 de chauffage consiste à déterminer la puissance de chauffage délivrée aux deuxièmes parties 18, 20 des préformes 12 sur un tronçon donné du parcours de chauffe dans le four 10, en particulier la variation de puissance est obtenue en réglant sélectivement l'intensité du courant circulant dans chaque moyen 30 de chauffage et de préférence pour chaque module M.

Ainsi, la puissance de chauffage est susceptible de varier suivant la direction de l'axe O de la préforme 12, ici verticalement, pour établir un profil de chauffe déterminé et la puissance de chauffage varie également au cours du parcours de chauffe, notamment entre la première et la deuxième zone de chauffage.

Toutefois, la puissance de chauffage délivrée peut encore varier d'un module M à l'autre au cours du parcours de chauffe, soit selon la direction longitudinale, en particulier pour établir une ou des zones de stabilisation dans lesquelles les moyens 30 de chauffage ne sont pas actifs.

Avantageusement, les moyens 52 de ventilation sont aptes à délivrer sélectivement un débit d'air de refroidissement déterminé dans une telle zone de stabilisation formant un des tronçons du parcours de chauffe.

En variante, les moyens 52 de ventilation sont inactifs dans une telle zone de stabilisation où l'air circule alors uniquement naturellement par convection.

De préférence, la régulation de la puissance de chauffage est déterminée en combinaison avec les variations du débit de l'air de refroidissement le long du parcours selon l'invention pour optimiser le procédé de conditionnement thermique.

Avantageusement, on détermine le temps d'exposition aux rayonnements des moyens 30 de chauffage en réglant la puissance ainsi que les vitesses de déplacement des préformes 12 sur le parcours de chauffe et en rotation sur elle-même.

Le procédé de conditionnement thermique des préformes 12 dans le four 10 comporte au moins une étape de commande du dispositif de refroidissement par air du système selon l'invention afin de faire varier le débit d'air de refroidissement délivré le long du parcours de chauffe, laquelle étape de commande est avantageusement mise en oeuvre en combinaison avec au moins l'une des étapes de réglage suivantes consistant à :
- régler la puissance des moyens 30 de chauffage pour faire varier au cours du parcours de chauffe la puissance de chauffage délivrée aux deuxièmes parties 18, 20 des préformes 12, en particulier pour établir des zones de stabilisation.

Avantageusement, il est également procédé à une régulation en temps réel, en fonction d'au moins un signal représentatif de la température, du réglage des paramètres de puissance délivrée par les moyens 30 de chauffage.

## Revendications

1. Procédé de commande d'un deuxième dispositif (42) de refroidissement qui, équipant un four (10) de conditionnement thermique de préformes (12) en matière thermoplastique comportant chacune respectivement une première partie (14, 16) à sa forme définitive et une deuxième partie (18, 20) destinée à être chauffée par des moyens (30) de chauffage disposés le long d'au moins une partie d'un parcours de chauffe déterminé suivi par les préformes (12) circulant dans le four, ledit four (10) comportant un système (36) de refroidissement apte à refroidir respectivement les premières parties (14, 16) et les deuxièmes parties (18, 20) des préformes, le système (36) de refroidissement comportant au moins un premier dispositif (40) de refroidissement pour refroidir la première partie (14, 16) des préformes (12) présentant leur forme définitive et ledit deuxième dispositif (42) de refroidissement apte à refroidir par air la deuxième partie (18, 20) des préformes (12), le deuxième dispositif (42) de refroidissement du système (36) de refroidissement étant indépendant du premier dispositif (40) de refroidissement, le deuxième dispositif (42) de refroidissement comportant au moins des moyens (52) de ventilation aptes à délivrer un débit donné d'air de refroidissement, ledit deuxième dispositif (42) de refroidissement comporte des moyens constitués par au moins un variateur (58) de vitesse associé à au moins un des moyens (52) de ventilation,,
**caractérisé en ce que** le procédé de commande comporte au moins une étape de commande du deuxième dispositif (42) de refroidissement consistant à :
- faire varier sélectivement, le long du parcours de chauffe des préformes (12), au moins le débit de l'air de refroidissement délivré par lesdits moyens (52) de ventilation pour le refroidissement desdites deuxièmes parties (18, 20) des préformes (12) pour que ledit débit ne soit pas constant tout au long du parcours de chauffe effectué par une préforme (12) à travers le four (10) depuis l'entrée E jusqu'à la sortie S,
et de sorte que la variation du débit d'air de refroidissement le long du parcours soit obtenue en commandant sélectivement ledit variateur (58) de vitesse associé audit un moyen (52) de ventilation, indépendamment des autres moyens (52) de ventilation du deuxième dispositif (42) de refroidissement.

2. Procédé selon la revendication 1, **caractérisé en ce que** le procédé comporte au moins une étape consistant à :
- mesurer la température interne et/ou externe de la paroi de la deuxième partie (18, 20) de la préforme (12) de manière à produire au moins un signal représentatif de la température interne et/ou externe de la paroi ou du gradient correspondant à la différence entre lesdites températures interne et externe.
au moins une étape de régulation consistant à :
- piloter en temps réel ledit au moins un variateur (58) de vitesse pour réguler en fonction d'au moins ledit signal représentatif de température, le débit d'air pour le refroidissement des deuxièmes parties (18, 20) des préformes (12) qui est délivré de manière variable le long du parcours de chauffe.

3. Procédé de conditionnement thermique de préformes (12) dans un four (10) comportant au moins une étape de commande du deuxième dispositif (42) de refroidissement selon la revendication 6 qui est mise en oeuvre en combinaison avec au moins une étape de réglage consistant à :
- régler la puissance des moyens (30) de chauffage pour faire varier au cours du parcours de chauffe la puissance de chauffage délivrée aux deuxièmes parties (18, 20) des préformes (12), en particulier pour établir des zones de stabilisation.

## Patentansprüche

1. Verfahren zum Steuern einer zweiten Kühlungsvorrichtung (42), die einen Wärmebehandlungsofen (10) von Vorformlingen (12) aus thermoplastischem Material ausrüstet, die jeweils einen ersten Teil (14, 16) mit endgültiger Form und einen zweiten Teil (18, 20), der dazu bestimmt ist, durch Heizmittel (30), die wenigstens längs eines Teils eines von den im Ofen umlaufenden Vorformlingen (12) verfolgten bestimmten Heizweges angeordnet sind, erwärmt zu werden, aufweisen, wobei der Ofen (10) ein Kühlsystem (36) umfasst, das die ersten Teile (14, 16) bzw. die zweiten Teile (18, 20) der Vorformlinge kühlen kann, wobei das Kühlsystem (36) wenigstens eine erste Kühlvorrichtung (40) zum Kühlen des ersten Teils (14, 16) der Vorformlinge (12) mit endgültiger Form und die zweiten Kühlvorrichtung (42) umfasst, die wenigstens den zweiten Teil (18, 20) der Vorformlinge (12) durch Luft kühlen kann, wobei die zweite Kühlvorrichtung (42) des Kühlsystems (36) unabhängig von der ersten Kühlvorrichtung (40) ist, wobei die zweite Kühlvorrichtung (42) wenigstens Luftblasmittel (52) enthält, die eine gegebene Kühlungsluftmenge liefern können, die zweite Kühlvorrichtung (42) Mittel aufweist, die durch wenigstens einen Geschwindigkeitsänderungseinrichtung (58) gebildet sind, der wenigstens einem der Luftblasmittel (52) zugeordnet ist,
**dadurch gekennzeichnet, dass** das Steuerverfahren wenigstens einen Schritt zum Steuern der zweiten Kühlvorrichtung (42) umfasst, der darin besteht:
- selektives Variieren, entlang des Heizweges der Vorformlinge (12), wenigstens der Kühlungsluftmenge der Kühlluft die von den Luftblasmittel (52) zum Kühlen der zweiten Teils (18, 20) der Vorformlinge (12) geliefert wird, so dass der Kühlungsluftmenge nicht konstant über den gesamten Heizweges ist, der von einer Vorform (12) durch den Ofen (10) von dem Einlass E zu dem Auslass S gemacht wird,
- und derart, dass die Variation der Kühlungsluftmenge entlang des Heizweges erreicht wird durch selektives Steuern des Geschwindigkeitsänderungseinrichtung (58), der mit dem Luftblasmittel (52) gebildet ist, unabhängig von dem anderen Luftblasmittel (52) des zweiten Kühlvorrichtung (42).

2. Verfahren nach Anspruch 1, **dadurch gekennzeichnet, dass** das Verfahren wenigstens einen Schritt umfasst, der darin besteht:
- die innere und/oder äußere Temperatur der Wand des zweiten Teils (18, 20) des Vorformlings (12) zu messen, derart, dass wenigstens ein Signal erzeugt wird, das die innere und/oder äußere Temperatur der Wand oder den Gradienten, der der Differenz zwischen der inneren und der äußeren Temperatur entspricht, repräsentiert,
und wenigstens einen Regulierungsschritt umfasst, der darin besteht:
- in Echtzeit die wenigstens eine Geschwindigkeitsänderungseinrichtung (58) zu steuern, um als Funktion wenigstens eines die Temperatur repräsentierenden Signals die Luftmenge für die Kühlung der zweiten Teile (18, 20) der Vorformlinge (12), die auf variable Weise längs des Heizwegs zugeführt wird, zu regulieren.

3. Verfahren zur Wärmebehandlung von Vorformlingen (12) in einem Ofen (10), das wenigstens einen Steuerschritt des zweiten Kühlvorrichtung (42) nach Anspruch 1 umfasst, der in Kombination mit wenigstens einem der folgenden Regulierungsschritte ausgeführt wird, die darin bestehen:
- die Leistung der Heizmittel (30) zu regulieren, um während des Heizdurchlaufs die an die zweiten Teile (18, 20) der Vorformlinge (12) gelieferte Heizleistung zu verändern, um insbesondere Stabilisierungszonen zu bilden.

## Claims

1. Method for operating a second cooling device (42) which, being fitted to a heat treatment oven (10) of thermoplastic preforms (12) each respectively comprising a first part (14, 16) in its definitive shape and a second part (18, 20) intended to be heated by heating means (30) arranged along at least part of a determined heating path followed by the preforms (12) travelling through the oven, the said oven (10) comprising a cooling system (36) capable respectively of cooling the first parts (14, 16) and the second parts (18, 20) of the preforms, the cooling system (36) comprising at least a first cooling device (40) for cooling the first part (14, 16) of the preforms (12) having their definitive shape and the said second cooling device (42) capable of air cooling at least the second part (18, 20) of the preforms (12), the second cooling device (42) of the cooling system (36) being independent of the first cooling device (40), the second cooling device (42) comprising at least ventilation means (52) capable of delivering a given flow rate of cooling air, the said second cooling device (42) comprises means constituted by at least one speed variator (58) associated with at least one of the ventilation means (52),
**characterized in that** the method for operating comprises at least one step of controlling the second cooling device (42) consisting in :
- selectively varying, along the heating path of the preforms (12), at least the flow rate of the cooling air delivered by said ventilation means (52) for cooling said second parts (18, 20) of the preforms (12) so that said flow rate is not constant throughout the heating path made by a preform (12) through the oven (10) from the inlet E to the outlet S,
and such that the variation of the cooling air flow along the path is achieved by selectively controlling said speed variator (58) associated with said ventilation means (52) independently of the other ventilation means (52) of the second cooling device (42).

2. Method according to Claim 1, **characterized in that** the method comprises at least one step consisting in:
- measuring the internal temperature and/or the external temperature of the wall of the second part (18, 20) of the preform (12) so as to produce at least one signal representative of the internal and/or external temperature of the wall or of the gradient corresponding to the difference between the said internal and external temperatures,
and at least one setting step consisting in:
- controlling in real time the said at least one speed variator (58) in order to set, as a function of at least said signal representative of temperature, the air flow rate for cooling second parts (18, 20) of the preforms (12) which flow rate is delivered variably along the heating path.

3. Method for heat treating preforms (12) in an oven (10) comprising at least one operating step of the second cooling device (42) according to Claim 1 which is implemented in combination with at least one setting step that consist in:
- setting the power of the heating means (30) so as to vary, along the heating path, the heating power delivered to the second parts (18, 20) of the preforms (12), particularly so as to establish stabilization zones.
